# FASCICULE DE BREVET EUROPEEN

(11) **EP 1 433 125 B1**
(45) Date de publication et mention de la délivrance du brevet: **02.08.2017**
(21) Numéro de dépôt: 02781383.1
(22) Date de dépôt: 24.09.2002
(51) Int. Cl.: G06K 19/04, G06K 19/077

(54) **CLÉ ÉLECTRONIQUE DESTINÉE À ÊTRE CONNECTÉE À UN PORT D'UN DISPOSITIF DE TÉLÉCOMMUNICATION**
MIT EINEM PORT EINER TELEKOMMUNIKATIONSEINRICHTUNG ZU VERBINDENDES DONGLE
DONGLE WHICH IS INTENDED TO BE CONNECTED TO A PORT OF A TELECOMMUNICATIONS DEVICE

(30) Priorité: 24.09.2001 FR 0112276
(43) Date de publication de la demande: 30.06.2004
(73) Titulaire: Gemalto SA, 92190 Meudon (FR)
(72) Inventeur: ELBAZ, Didier, 13010 Marseille (FR); MOUTEL, François, 83640 Saint Zacharie (FR)
(74) Mandataire: Milharo, Emilien
(86) Numéro de dépôt international: PCT/FR2002/003247
(87) Numéro de publication internationale: WO 2003/027946

(56) Documents cités:
- WO-A-01/69881
- WO-A-94/10651
- WO-A2-01/69881
- FR-A- 2 783 336
- FR-A- 2 783 336
- US-A- 5 442 170
- "CARTE A PUCE A INTERFACE USB", ELECTRONIQUE, no. 104, 1 June 2000 (2000-06-01), page 68,

## Description

L'invention concerne une clé électronique comprenant un module comportant une puce à circuit intégré connectée à des plages de contact affleurant à la surface dudit module, destinée à être connectée à un port d'un dispositif de télécommunication.

L'invention se rapporte également à un procédé de fabrication de ladite clé électronique.

Le domaine de l'invention est celui de la sécurisation de données, de l'accès à Internet, de l'identification, du commerce électronique, du paiement en ligne, etc., au moyen d'une clé électronique qui peut être de type USB (du nom de la norme "Universal Serial Bus" en anglais) connectée à un port de type USB d'un dispositif de télécommunication tel qu'un ordinateur ou un téléphone mobile ; le domaine d'application est le même que celui de la carte à puce.

L'utilisateur d'une clé électronique USB peut la connecter à un ordinateur personnel, la déconnecter de celui-ci lorsque par exemple l'utilisation de la clé n'est plus nécessaire à l'application qu'il a lancée et la mettre alors sur son porte-clé pour la connecter ultérieurement.

Les dimensions et les caractéristiques électriques du port USB sont normalisées et par conséquent celles de la partie de la clé qui est insérée dans le port.

Cependant plusieurs types de clés existent actuellement.

Parmi celles-ci, on peut citer la clé électronique décrite dans la demande de brevet WO 00/70533 sous le terme de lecteur portatif.

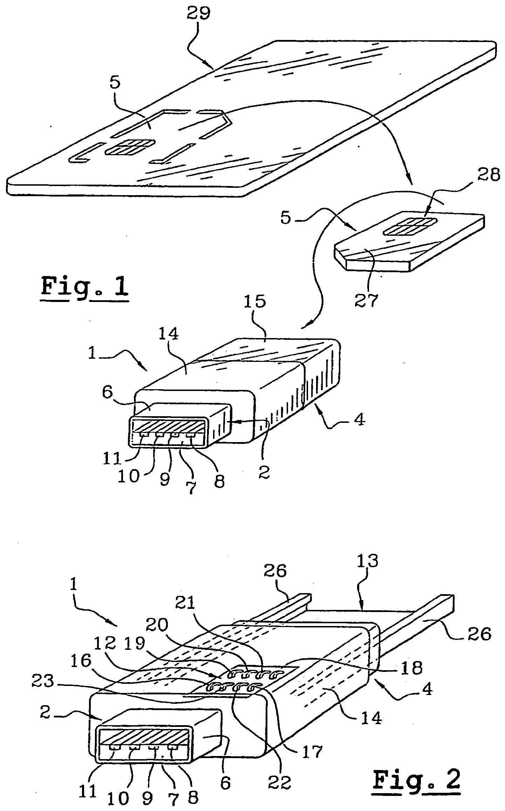

Ce lecteur portatif 1 comporte comme indiqué figure 1, une partie de connexion électrique 2 à un port d'un ordinateur personnel ainsi qu'une partie d'insertion 4 d'un module 5 électronique amovible. La partie de connexion électrique 2 également représentée figure 2, présente un élément 7 plastique de support à la surface duquel affleurent quatre lignes métallisées parallèles formant un connecteur pour une connexion électrique du lecteur 1 au port. Une première ligne 8 est destinée à une alimentation en courant Vbus du lecteur, une seconde 9 et une troisième 10 lignes sont destinées à une communication de données numériques audit lecteur 1 et une quatrième ligne 11 est destinée à la masse du lecteur 1.

La partie d'insertion 4 plus particulièrement montrée figure 2, présente un connecteur 12, des glissières d'insertion 26 du module 5 ainsi qu'une coque 14 de protection refermée par un bouchon 15.

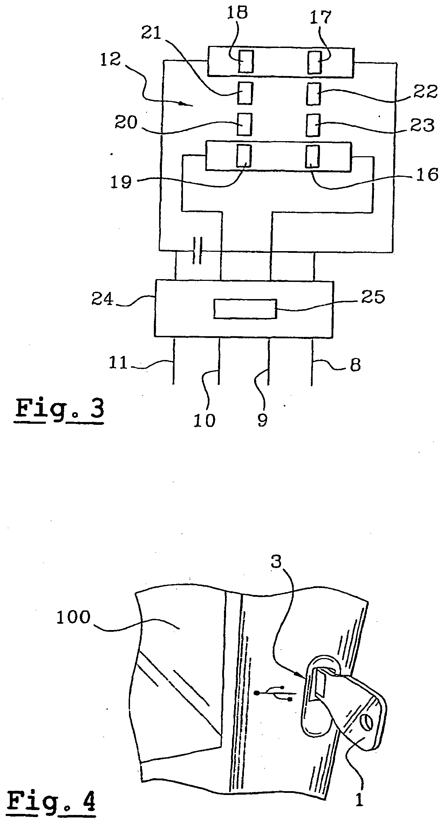

Le connecteur 12 se compose d'un ensemble d'au moins quatre pattes de connexion 16,17, 18 et 19 électriquement connectées chacune à une des lignes de connexion 8,9, 10 et 11 de la partie de connexion 2, comme représenté figure 3. Les autres pattes 20, 21,22 et 23 sont connectées ou non par exemple à un élément de conversion 24 de protocole ISO/USB et/ou à un élément d'horloge 25.

Le module 5 obtenu à partir d'un procédé de fabrication d'une carte à puce 29 et représenté figure 1 se compose d'un corps de module 27 plastique dans lequel est noyé une puce à circuit intégré connectée à des plages de contact 28 affleurant à la surface dudit module 5 et comportant au moins quatre plages de contact pour l'alimentation en courant de la puce, la communication de données numériques et la mise à la masse.

Lorsque le lecteur 1 est connecté à l'ordinateur et que celui-ci est sous tension, cet ordinateur détecte la présence du lecteur 1 et des données peuvent être échangées entre la puce du module 5 et l'ordinateur via le système de bus USB, selon l'application résidant dans la puce: sécurisation de données, de l'accès à Internet, de l'identification, du commerce électronique, du paiement en ligne, etc.

Le coût de fabrication de ces clés est élevé en raison notamment du nombre d'éléments 2,5, 12 à fabriquer, assembler et à connecter électriquement.

Le but de la présente invention est donc de proposer une clé électronique moins chère à fabriquer.

L'invention a pour objet une clé électronique conforme à la revendication 1.
Le port peut être de type USB.

Le module 5 comprend de préférence un corps de module 27 de l'épaisseur d'une carte à puce 29.

Selon une caractéristique de l'invention, la clé comprend un moyen pour rendre tout ou partie de son épaisseur, notamment au niveau desdites plages de contact 28, égale à une épaisseur déterminée par l'épaisseur du port.

Le corps de module 27 présentant des bords longitudinaux, ledit moyen peut être composé desdits bords longitudinaux ayant une épaisseur égale à ladite épaisseur déterminée.

Le moyen peut aussi être une cale éventuellement en résine, appliquée sur tout ou partie d'une des faces du module 5, opposée à celle des plages de contact 28 et dite face inférieure, la cale et le module 5 présentant alors ensemble une épaisseur égale à ladite épaisseur déterminée.

De manière préférentielle, la clé 1 et le module 5 ne forment qu'un seul élément.

Selon une autre caractéristique de l'invention, le moyen est un adaptateur apte à recevoir tout ou partie dudit module 5.

L'adaptateur comprend avantageusement des moyens de guidage et de blocage dudit module 5 et éventuellement des moyens de positionnement du module 5 à une hauteur correspondant à une hauteur déterminée par l'épaisseur du port.

L'invention a aussi pour objet un procédé de fabrication d'une clé électronique conforme à la revendication 13.

Selon une caractéristique préférentielle de l'invention, le port est de type USB.

Le port présentant un format déterminé, et le module comportant en outre un corps de module, le procédé peut comprendre l'étape consistant à découper le corps du module selon un format compatible avec celui du port.

Selon une autre caractéristique de l'invention, le module présentant des bords longitudinaux, le procédé comprend l'étape consistant à plier ou cintrer les bords longitudinaux de façon à ce que ces bords présentent une épaisseur égale à une épaisseur déterminée par l'épaisseur du port ou l'étape consistant à encarter ou thermoformer ou surmouler une rainure sur chacun desdits bords longitudinaux de façon à ce que lesdits bords présentent une épaisseur égale à une épaisseur déterminée par l'épaisseur du port.

Selon une autre caractéristique de l'invention, le procédé comprend l'étape consistant à déposer de la matière sur tout ou partie d'une face dudit module opposée à celle des plages de contact de façon à ce que le module présente en totalité ou en partie une épaisseur égale à une épaisseur déterminée par l'épaisseur du port ou l'étape consistant à insérer ledit module dans un adaptateur destiné à être lui-même inséré dans ledit port.

D'autres particularités et avantages de l'invention apparaîtront clairement à la lecture de la description faite à titre d'exemple non limitatif et en regard des dessins annexés sur lesquels :
les figures 1 et 2 déjà décrites représentent schématiquement différents éléments d'un lecteur portatif selon l'état de la technique,
la figure 3 déjà décrite illustre schématiquement différentes lignes de connexion électrique au sein d'un lecteur portatif selon l'état de la technique,
la figure 4 représente schématiquement un ordinateur personnel comportant un port USB dans lequel est insérée une clé électronique,
la figure 5 illustre schématiquement une carte à puce au format ISO destinée à devenir une clé électronique selon l'invention,
la figure 6 représente schématiquement les plages de contact d'un module destiné à être connecté à un port de type USB,
les figures 7a, 7b et 7c représentent respectivement une coupe longitudinale et une coupe transversale d'un port USB et une coupe longitudinale du port dans lequel une clé selon l'invention est insérée,
les figures 8a et 8b représentent schématiquement une clé obtenue selon un premier mode de réalisation de l'invention, vue en perspective de dessus et de dessous,
la figure 9 représente schématiquement une clé obtenue selon un deuxième mode de réalisation de l'invention, vue en perspective de dessus,
les figures 10a, 10b et 10c représentent schématiquement différentes étapes d'obtention d'une clé selon un troisième mode de réalisation de l'invention, vue en perspective de dessus.

Dans la suite de la description, les mêmes références sont utilisées pour désigner les mêmes éléments que ceux des figures déjà décrites.

La figure 4 représente un ordinateur personnel 100 comportant un port USB 3 dans lequel est insérée une clé électronique 1 selon l'invention.

La clé électronique 1 selon l'invention intègre en un seul élément, en l'occurrence le module 5 les différents éléments constitutifs de cette clé décrits dans l'état de la technique.

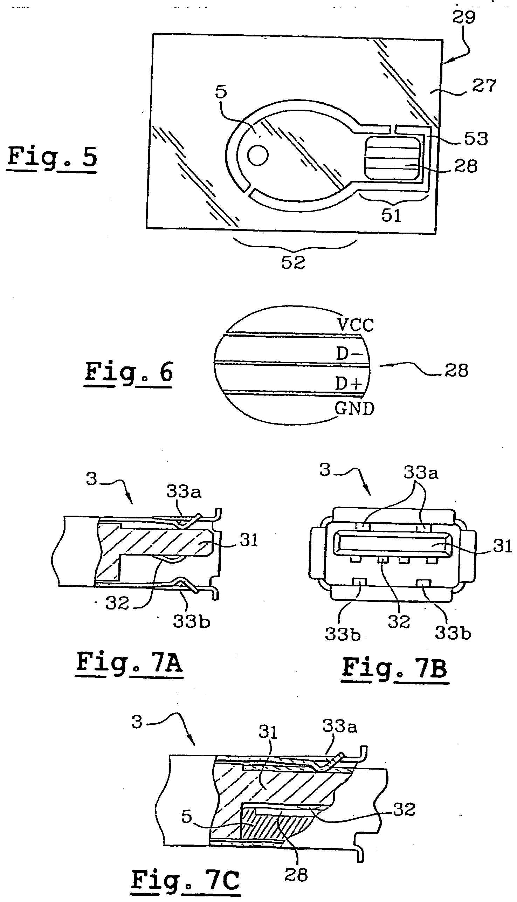

Comme représenté figure 5, le module 5 est avantageusement découpé dans une carte à puce à contact 29 au format ISO par exemple, selon une découpe 53 reproduisant par exemple la forme d'une clé, les plages de contact 28 de la carte à puce 29 étant présentes sur la partie 51 de la clé destinée à être insérée dans le port 3, la partie 52 constituée du corps 27 de la carte permettant à l'utilisateur de la clé de la manipuler.

Le module 5 est fabriqué de façon à ce que les plages de contact 28 du module 5 soient disposées selon une configuration correspondant aux pattes de connexion électrique du port qui est décrit plus loin. Quatre plages de contact correspondant aux pattes de connexion d'un port de type USB sont représentées figure 6 : l'une VCC pour l'alimentation en courant, une autre GND pour la mise à la masse, les deux autres D- et D+ pour la communication des données, conformément à la norme USB.

Ces plages de contact se substituent-alors avantageusement aux quatre lignes métallisées 8,9, 10 et 11 représentées figures 1, 2 et 3 et rendent alors superflus le connecteur 12 et les moyens de connexion de ce connecteur aux quatre lignes métallisées.

En outre, les cartes à puce à contact actuelles telles que les cartes ISO présentent déjà certaines caractéristiques leur assurant une bonne résistance aux agressions provoquées par un usage fréquent comme celui par exemple d'une carte bancaire. Il n'est alors plus nécessaire de prévoir pour la clé selon l'invention, des éléments de protection du module tels que les éléments 6,14 et 15 représentés figure 1.

La clé 1 selon l'invention n'est finalement composée que du module 5. Le procédé de fabrication d'une telle clé 1 est alors identique au procédé de fabrication bien connu d'une carte à puce et présente l'avantage de supprimer la fabrication et l'assemblage de la plupart des éléments décrits dans l'état de la technique.

Un port 3 de type USB dans lequel est inséré une clé selon l'invention est représenté figure 7c. On va tout d'abord décrire le port 3 sans clé.

Un tel port 3 est représenté figure 7a selon une coupe longitudinale et figure 7b selon une coupe transversale. On distingue outre les pattes de connexion 32 fixées à une partie de connexion 31 en saillie, des lames de blocage supérieures 33a et inférieures 33b destinées à bloquer la clé électronique dans le port 3 lorsque celle-ci y est insérée. Ce blocage n'est bien sûr pas définitif dans la mesure où la clé est amovible.

Lorsque la clé selon l'invention est insérée dans le port comme représenté figure 7c, les plages de contact 28 du module sont en contact avec les pattes de connexion 32 du port et les échanges entre l'ordinateur et la puce du module peuvent alors s'effectuer, via le port USB. Les lames de blocage 33b inférieures (non représentées sur la figure 7c) bloquent la clé 1 en position insérée ; les lames de blocage 33a supérieures ne sont pas utilisées.

La plupart des cartes à puce à contact fabriquées actuellement telles que les cartes ISO, ont une épaisseur d'environ 0,8 mm. L'épaisseur de la clé doit être d'environ 2 mm pour que les plages de contact 28 du module puissent être en contact avec les pattes 32 de connexion électrique d'un port de type USB lorsque la clé est insérée dans le port, comme représenté figure 7c.

Il faut alors dans ce cas, développer de nouveaux ports de type USB spécifiques pour des clés de cette épaisseur. ou augmenter jusqu'à l'épaisseur désirée, l'épaisseur du module ou tout du moins celle de la partie 51 qui est destinée à être insérée dans le port.

Plusieurs méthodes sont envisageables.

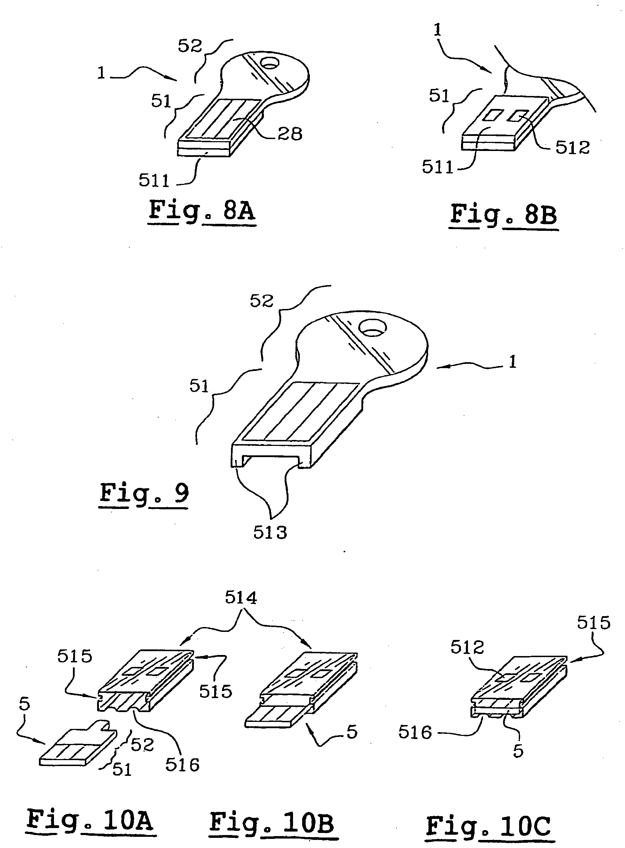

Comme représenté figures 8a et 8b, une cale 511 peut être appliquée sur tout ou partie de la face inférieure de cette partie 51 du module, c'est-à-dire la face opposée à celle où affleurent les plages de contact 28. Cette cale 511 peut par exemple être obtenue par dépôt de matière, cette matière pouvant être de la résine.

Lorsque la cale 511 est appliquée sur toute la face inférieure de la partie 51, elle présente de préférence des ouvertures 512 destinées à recevoir les lames de blocage 33b inférieures du port.

Mais comme représenté figure 9, cette cale 511 peut n'être appliquée que par exemple sur les bords longitudinaux 513 de cette partie 51. Les lames de blocage 33b inférieures ne sont alors plus utilisées ; le frottement de la clé 1 dans le port 3 peut suffire à bloquer la clé 1 mais tout autre moyen de blocage peut être utilisé.

Les bords 513 du module peuvent aussi être recourbés au niveau de la partie 51 par pliage ou cintrage pour atteindre l'épaisseur désirée.

Une rainure peut aussi être ajoutée au niveau des bords par encartage (collage), thermoformage ou surmoulage.

Une autre méthode consiste à utiliser un adaptateur 514 représenté figures 10a, 10b et 10c, destiné à recevoir le module 5 ou tout du moins la partie 51 du module et dont les dimensions extérieures sont compatibles avec les dimensions intérieures du port : l'adaptateur peut par exemple reprendre les dimensions extérieures de la partie 6 représentée figures 1 et 2.

Plus précisément, la figure 10a représente l'adaptateur 514 dans lequel le module 5 n'a pas encore été inséré, la figure 10b, l'adaptateur 514 dans lequel le module 5 est en cours d'insertion et la figure 10c, l'adaptateur 514 dans lequel le module 5 est inséré.

L'adaptateur 514 comprend des moyens de guidage 515 du module 5 ou de la partie 51 du module, constitués par exemple de nervures situées sur les côtés, et des moyens (non représentés) de blocage du module 5 ou de la partie 51, en position insérée dans l'adaptateur constitués par exemple d'une butée disposée au fond du connecteur. Ces moyens de blocage ne bloquent pas nécessairement le module dans l'adaptateur de manière définitive ; le module est de préférence amovible pour être éventuellement remplacé par un autre module.

Il comprend aussi des moyens 516 pour surélever le module 5 ou la partie 51 de façon à ce que les plages de contact 28 soient en contact avec les pattes de connexion 32 lorsque la clé 1 constituée de l'ensemble adaptateur plus module est insérée dans le port 3 : ces moyens 516 peuvent être des nervures situées à la base du connecteur 514 ou sur les côtés et ainsi coopérer avec les moyens de guidage 515. Les moyens de guidage 515 du module assurent alors également le positionnement du module à la bonne hauteur.

Les nervures peuvent être obtenues par pliage, emboutissage, poinçonnage, etc.

L'adaptateur 514 peut aussi comporter des ouvertures 512 supérieures et/ou inférieures (non visibles sur ces vues de dessus) destinées à recevoir les lames de blocage 33a et/ou 33b lorsqu'il est inséré dans le port 3.

Cet adaptateur assure en outre une protection supplémentaire du module.

Il peut également assurer une protection supplémentaire pour un module présentant l'épaisseur requise tel que ceux représentés figures 8a et 9, ne nécessitant alors pas d'être surélevés ; dans ce cas, l'adaptateur ne comporte pas de moyens 516 pour surélever le module.

Dans la technologie carte à puce utilisée par l'invention, les dispositifs à puce de circuit intégré ou module selon l'invention, utilisent comme composants de départ des composants conformes à tout ou partie à la norme ISO 7816 ou la norme des mini-cartes SIM voire les cartes de la prochaine génération. Ainsi, par exemple, selon la norme 7816, le corps de carte est un corps rectangulaire présentant une face supérieure et inférieure planes et dont l'épaisseur est égale à 0,76 mm ; Les plages de contact sont au même niveau que la face supérieure du corps de carte. Selon la norme la tolérance de niveau est par exemple de 50 µm ; La puce de circuit intégré est située à l'aplomb des plages de contact auxquelles elle est connectée électriquement; Elle fait partie d'un micro-module qui est ensuite encarté dans une cavité d'un corps de carte obtenu généralement par moulage-injection ou par lamination.

Le micro-module comporte généralement un film support diélectrique portant d'un côté des plages de contact et de l'autre, à l'aplomb des plages de contact, la puce de circuit intégré. Une goutte de résine de protection enrobe généralement la puce de circuit intégré et ses connexions aux plages de contact. Le micro-module est fixé dans la cavité notamment par collage à l'aide notamment d'un film adhésif ou gouttes de colle. La cavité de réception du micro-module est généralement à deux étages, un pour recevoir le diélectrique et les plages de contact, l'autre pour recevoir la puce de circuit intégré.

Pour obtenir le dispositif de l'invention, le corps est ensuite adapté au format du port envisagé pour permettre son insertion et connexion électrique par contact physique direct des plages de contact avec les connecteurs du port. L'adaptation peut s'effectuer soit via un adaptateur de forme soit en créant des cales sur certaines parties du corps, notamment sur certaines parties de la face inférieure du corps. Les cales peuvent être formées notamment par déformation du corps ou par ajout de matière sur certaines parties du corps.

Le dispositif de l'invention comporte donc de préférence, pour des questions de coûts, le plus possible des caractéristiques des composants carte à puce ci-dessus.

## Revendications

1. Clé électronique (1) de communication de données entre ladite clé et un dispositif de communication, ladite clé étant agencée pour connecter un port (3) d'un dispositif de communication (100) et communiquer lesdites données via ce port dont les pattes de connexion électriques (32) sont parallèles entre elles,
- ladite clé comprenant un module avec un corps (5) présentant deux surfaces externes principales opposées et planes, une puce de circuit intégré, des plages de contact (28) reliées à ladite puce et débouchant du côté de l'une de ces surfaces,
**caractérisée en ce que** les plages de contact (28) sont formées d'une rangée de pistes linéaires espacées entre elles sur leurs côtés longitudinaux, de manière à correspondre géométriquement à l'agencement des pattes de connexion (32) du dispositif et pouvoir être connectées directement et physiquement à leur patte de connexion respective, lors de l'insertion de la clé dans le port.

2. Clé électronique selon la revendication précédente, **caractérisée en ce que** le port (3) est de type USB.

3. Clé électronique (1) selon l'une quelconque des revendications précédentes, **caractérisée en ce que** le module (5) comprend un corps de module (27) de l'épaisseur d'une carte à puce (29).

4. Clé électronique (1) selon l'une quelconque des revendications précédentes, **caractérisée en ce qu'**elle comprend un moyen pour rendre tout ou partie de l'épaisseur.de ladite clé (1), égale à une épaisseur déterminée par l'épaisseur du port (3).

5. Clé électronique (1) selon la revendication précédente, **caractérisée en ce que** ledit moyen est apte à obtenir ladite épaisseur déterminée, au niveau desdites plages de contact (28).

6. Clé électronique (1) selon l'une quelconque des revendications 4 ou 5, **caractérisée en ce que** le module (5) comprend un corps de module (27) présentant des bords longitudinaux (513), et **en ce que** ledit moyen est composé desdits bords longitudinaux (513) ayant une épaisseur égale à ladite épaisseur déterminée.

7. Clé électronique (1) selon l'une quelconque des revendications 4 ou 5, **caractérisée en ce que** le moyen est une cale (511) appliquée sur tout ou partie d'une des faces du module (5), opposée à celle des plages de contact (28) et dite face inférieure, ladite cale (511) et ledit module (5) présentant alors ensemble une épaisseur égale à ladite épaisseur déterminée.

8. Clé électronique (1) selon la revendication précédente, **caractérisée en ce que** la cale (511) est composée de résine.

9. Clé électronique (1) selon l'une quelconque des revendications précédentes, **caractérisé en ce que** la clé (1) et le module (5) ne forment qu'un seul élément.

10. Clé électronique (1) selon l'une quelconque des revendications 4 à 5, **caractérisée en ce que** le moyen est un adaptateur (514) apte à recevoir tout ou partie dudit module (5).

11. Clé électronique (1) selon la revendication précédente, **caractérisée en ce que** l'adaptateur (514) comprend des moyens de guidage (515) dudit module (5) et des moyens de blocage (512) dudit module (5).

12. Clé électronique (1) selon la revendication précédente, **caractérisée en ce que** l'adaptateur (514) comporte des moyens de positionnement (515 ou 516) du module (5) à une hauteur correspondant à une hauteur déterminée par l'épaisseur du port (3).

13. Clé électronique (1) selon l'une quelconque des revendications précédentes, **caractérisée en ce qu'**elle comprend des composants conformes en tout ou partie à la norme ISO 7816 ou la norme des mini-cartes SIM.

14. Clé électronique (1) selon l'une quelconque des revendications précédentes, **caractérisée en ce que** la puce de circuit intégré comprend une application de sécurisation de données ou une application d'accès à internet ou une application de commerce électronique ou une application de paiement en ligne.

15. Clé électronique (1) selon la revendication précédente, **caractérisée en ce que** ladite application est une application pour puce de carte à puce.

16. Clé électronique (1) selon l'une quelconque des revendications 1 à 6 ou 9, **caractérisée en ce qu'**elle comprend un adaptateur (514) recevant le module (5), ledit adaptateur comportant des dimensions extérieures compatibles avec des dimensions intérieures du port.

17. Procédé de fabrication d'une clé électronique (1) de communication de données entre ladite clé et un dispositif de communication, ladite clé étant agencée pour connecter un port (3) d'un dispositif de communication (100) et communiquer lesdites données via ce port dont des pattes de connexion électriques (32) sont parallèles entre elles,
- ladite clé comprenant un module avec un corps (5) présentant deux surfaces externes principales opposées et planes, une puce de circuit intégré, des plages de contact (28) reliées à ladite puce et débouchant du côté de l'une de ces surfaces,
**caractérisé en ce qu'**il comprend une étape de réalisation d'un micro-module comportant la puce et les plages de contact, une étape de fixation du micro-module dans le corps (5),
les plages de contact (28) étant formées d'une rangée de pistes linéaires espacées entre elles sur leurs côtés longitudinaux, de manière à correspondre à l'agencement des pattes de connexion (32) du dispositif et pouvoir être connectées directement et physiquement à leur patte de connexion respective, lors de l'insertion de la clé dans ledit port.

18. Procédé selon la revendication précédente, **caractérisé en ce que** le port est de type USB.

19. Procédé selon l'une quelconque des revendications 17 ou 18 et selon lequel le port présente un format déterminé, **caractérisé en ce que** le module comporte en outre un corps de module et **en ce que** ledit procédé comprend l'étape consistant à découper ledit corps du module selon un format compatible avec celui dudit port.

20. Procédé selon l'une quelconque des revendications 17 à 19, **caractérisé en ce que** le module présente des bords longitudinaux et **en ce que** ledit procédé comprend l'étape consistant à plier ou cintrer lesdits bords longitudinaux de façon à ce que lesdits bords présentent une épaisseur égale à une épaisseur déterminée par l'épaisseur du port.

21. Procédé selon l'une quelconque des revendications 17 à 19, **caractérisé en ce que** le module présente des bords longitudinaux et **en ce que** ledit procédé comprend l'étape consistant à encarter ou thermoformer ou surmouler une rainure sur chacun desdits bords longitudinaux de façon à ce que lesdits bords présentent une épaisseur égale à une épaisseur déterminée par l'épaisseur du port.

22. Procédé selon l'une des revendications 17 à 19, **caractérisé en ce qu'**il comprend l'étape consistant à déposer de la matière sur tout ou partie d'une face dudit module opposée à celle des plages de contact de façon à ce que le module présente en totalité ou en partie une épaisseur égale à une épaisseur déterminée par l'épaisseur du port.

23. Procédé selon l'une quelconque des revendications 17 à 22, **caractérisé en ce qu'**il comporte l'étape consistant à insérer ledit module dans un adaptateur destiné à être lui-même inséré dans ledit port.

## Patentansprüche

1. Elektronischer Schlüssel (1) für die Datenübertragung zwischen dem Schlüssel und einer Kommunikationsvorrichtung, wobei besagter Schlüssel so gestaltet ist, dass er an den Port (3) einer Kommunikationsvorrichtung (100) angeschlossen werden kann und besagte Daten über diesen Port mit parallel verlaufenden elektrischen Anschlusselementen (32) übertragen werden können,
- wobei besagter Schlüssel ein Modul mit einem Körper (5) umfasst, der zwei äußere, einander gegenüberliegende ebene Hauptflächen, einen integrierten Schaltkreischip und Kontaktbereiche (28) aufweist, die mit dem Chip verbunden sind und zu einer dieser Flächen führen,
**dadurch gekennzeichnet, dass** die Kontaktbereiche (28) aus einer Reihe linearer Spuren bestehen, die an ihrer Längsseite so zueinander beabstandet sind, dass sie geometrisch der Anordnung der Anschlusselemente (32) der Vorrichtung entsprechen und beim Einschieben des Schlüssels in den Port materiell direkt an ihr jeweiliges Verbindungselement angeschlossen werden.

2. Elektronischer Schlüssel nach dem vorhergehenden Anspruch, **dadurch gekennzeichnet, dass** der Port (3) ein USB-Anschluss ist.

3. Elektronsicher Schlüssel (1) nach einem der vorhergehenden Ansprüche, **dadurch gekennzeichnet, dass** das Modul (5) einen Modulkörper (27) umfasst, der so dick wie eine Chipkarte (29) ist.

4. Elektronischer Schlüssel (1) nach einem der vorhergehenden Ansprüche, **dadurch gekennzeichnet, dass** er ein Mittel umfasst, mit dem die Dicke besagten Schlüssels (1) ganz oder teilweise auf eine Dicke gebracht werden kann, die von der Dicke des Ports (3) vorgegeben ist.

5. Elektronischer Schlüssel (1) nach dem vorhergehenden Anspruch, **dadurch gekennzeichnet,**
**dass** dieses Mittel in der Lage ist, die besagte Dicke an den Kontaktbereichen (28) zu erzielen.

6. Elektronischer Schlüssel (1) nach einem der Ansprüche 4 oder 5, **dadurch gekennzeichnet, dass** das Modul (5) einen Modulkörper (27) mit Längskanten (513) umfasst, und dadurch, dass besagtes Mittel aus besagten Längskanten (513) besteht, wobei diese eine Dicke aufweisen, die mit der vorgegebenen Dicke übereinstimmt.

7. Elektronischer Schlüssel (1) nach einem der Ansprüche 4 oder 5, **dadurch gekennzeichnet, dass** das Mittel ein Distanzstück (522) ist, das ganz oder teilweise an einer der Seiten des Moduls (5) gegenüber der Seite der Kontaktbereiche (28) und besagter Unterseite eingefügt wird, wobei das Distanzstück (511) und das Modul (5) gemeinsam eine Dicke aufweisen, die der vorgegebenen Dicke entspricht.

8. Elektronischer Schlüssel (1) nach dem vorhergehenden Anspruch, **dadurch gekennzeichnet, dass** das Distanzstück (511) aus Harz besteht.

9. Elektronischer Schlüssel (1) nach einem der vorhergehenden Ansprüche, **dadurch gekennzeichnet, dass** besagter Schlüssel (1) und das Modul (5) ein einziges Element bilden.

10. Elektronischer Schlüssel (1) nach einem der Ansprüche 4 bis 5, **dadurch gekennzeichnet, dass** das Mittel ein Adapter (514) ist, der in der Lage ist, besagtes Modul (5) ganz oder teilweise aufzunehmen.

11. Elektronischer Schlüssel (1) nach dem vorhergehenden Anspruch, **dadurch gekennzeichnet, dass** der Adapter (514) Führungsmittel (515) für das Modul (5) und Arretiermittel (512) für das Modul (5) umfasst.

12. Elektronischer Schlüssel (1) nach dem vorhergehenden Anspruch, **dadurch gekennzeichnet, dass** der Adapter (514) Mittel (515 oder 516) zur Positionierung des Moduls (5) auf eine Höhe aufweist, die einer durch die Dicke des Ports (3) vorgegebenen Höhe entspricht.

13. Elektronischer Schlüssel (1) nach einem der vorhergehenden Ansprüche, **dadurch gekennzeichnet, dass** er Elemente umfasst, die ganz oder teilweise mit der Norm ISO 7816 oder dem SIM-Mini-Kartenstandard übereinstimmen.

14. Elektronischer Schlüssel (1) nach einem der vorhergehenden Ansprüche, **dadurch gekennzeichnet, dass** der integrierte Schaltkreischip eine Applikation zur Datensicherung, eine Applikation für den Internetzugang, eine Applikation für elektronischen Handel oder eine Applikation für Onlinezahlung enthält.

15. Elektronsicher Schlüssel (1) nach dem vorhergehenden Anspruch, **dadurch gekennzeichnet, dass** besagte Applikation eine Applikation für einen Chipkartenchip ist.

16. Elektronischer Schlüssel (1) nach einem der Ansprüche 1 bis 6 oder 9, **dadurch gekennzeichnet, dass** er einen Adapeter (514) zur Aufnahme des Moduls (5) enthält, wobei besagter Adapter Außenmaße aufweist, die mit den Innenmaßen des Ports kompatibel sind.

17. Verfahren zur Herstellung eines elektronischen Schlüssels (1) für die Übertragung von Daten zwischen dem Schlüssel und einer Kommunikationsvorrichtung, wobei besagter Schlüssel so gestaltet ist, dass er an den Port (3) einer Kommunikationsvorrichtung (100) angeschlossen werden kann und besagte Daten über diesen Port mit parallel verlaufenden elektrischen Anschlusselementen (32) übertragen werden können,
- wobei besagter Schlüssel ein Modul mit einem Körper (5) umfasst, der zwei äußere, einander gegenüberliegende ebene Hauptflächen, einen integrierten Schaltkreischip, und Kontaktbereiche (28), die an besagten Chip angeschlossen sind und zu einer dieser Flächen führen, umfasst,
**dadurch gekennzeichnet, dass** es einen Schritt umfasst, in dem ein Mikromodul mit Chip und Kontaktbereichen hergestellt wird, und einen Schritt, in dem das Mikromodul im Körper (5) befestigt wird,
wobei die Kontaktbereiche (28) aus einer Reihe linearer Spuren bestehen, die an ihrer Längsseite so zueinander beabstandet sind, dass sie geometrisch mit der Anordnung der Verbindungselemente (32) der Vorrichtung übereinstimmen und beim Einschieben des Schlüssels in den Port materiell direkt an ihr jeweiliges Verbindungselement angeschlossen werden können.

18. Verfahren nach dem vorhergehenden Anspruch, **dadurch gekennzeichnet, dass** der Port ein USB-Anschluss ist.

19. Verfahren nach einem der Ansprüche 17 oder 18, demzufolge der Port ein bestimmtes Format hat, **dadurch gekennzeichnet, dass** das Modul des Weiteren einen Modulkörper umfasst und dass besagtes Verfahren einen Schritt umfasst, bei dem der Modulkörper in ein Format gebracht wird, das mit dem des Ports kompatibel ist.

20. Verfahren nach einem der Ansprüche 17 bis 19, **dadurch gekennzeichnet, dass** das Modul Längskanten aufweist und dass besagtes Verfahren einen Schritt umfasst, der darin besteht, besagte Längskanten so zu knicken oder biegen, dass sie eine Dicke aufweisen, die mit der durch die Dicke des Ports vorgegebenen Dicke übereinstimmt.

21. Verfahren nach einem der Ansprüche 17 bis 19, **dadurch gekennzeichnet, dass** das Modul Längskanten aufweist und dass besagtes Verfahren einen Schritt umfasst, der darin besteht, eine Rille in jede der Längskanten einzufalzen, warmzuformen oder anzuformen, so dass besagte Kanten eine Dicke aufweisen, die mit einer durch die Dicke des Ports vorgegebenen Dicke übereinstimmt.

22. Verfahren nach einem der Ansprüche 17 bis 19, **dadurch gekennzeichnet, dass** es einen Schritt umfasst, in dem Material ganz oder teilweise auf einer Seite des Moduls gegenüber der Seite der Kontaktbereiche aufgetragen wird, so dass das Modul ganz oder teilweise eine Dicke aufweist, die mit einer durch die Dicke des Ports vorgegebenen Dicke übereinstimmt.

23. Verfahren nach einem der Ansprüche 17 bis 22, **dadurch gekennzeichnet, dass** es einen Schritt umfasst, der darin besteht, besagtes Modul in einen Adapter einzufügen, der dazu bestimmt ist, in besagten Port gesteckt zu werden.

## Claims

1. An electronic key (1) for the communication of data between said electronic key and a communication device, with said electronic key being so arranged as to connect a port (3) of a communication device (100) and communicate said data via such port the electric connection pins (32) of which are mutually parallel,
- with said electronic key comprising a module with a body (5) having two opposed and flat main external surfaces, an integrated circuit chip, contact pads (28) connected to said chip and opening on the side of one of such surfaces,
**characterized in that** the contact pads (28) consist of a row of linear tracks spaced apart on their longitudinal sides, so as to geometrically match the arrangement of the connection pins (32) of the device and be adapted to be directly and physically connected to their respective connection pins, when inserting the electronic key into the port.

2. An electronic key according to the preceding claim, **characterized in that** the port (3) is of the USB type.

3. An electronic key (1) according to any one of the preceding claims, **characterized in that** the module (5) comprises a module body (27) having the thickness of a chip card (29).

4. An electronic key (1) according to any one of the preceding claims, **characterized in that** it comprises means for making all or part of the thickness of said electronic key (1) equal to a thickness determined by the thickness of the port (3).

5. An electronic key (1) according to the preceding claim, **characterized in that** said means is able to obtain said determined thickness, at said contact pads (28).

6. An electronic key (1) according to any one of claims 4 or 5, **characterized in that** the module (5) comprises a module body (27) having longitudinal edges (513), and **in that** said means consists of said longitudinal edges (513) having a thickness equal to said determined thickness.

7. An electronic key (1) according to any one of claims 4 or 5, **characterized in that** the means is a leveling pad (511) applied onto all or part of one of the faces of the module (5), opposed to the one provided with the contact pads (28) and so-called the lower face, with said leveling pad (511) and said module (5) then having together a thickness equal to said determined thickness.

8. An electronic key (1) according to the preceding claim, **characterized in that** the leveling pad (511) is made of resin.

9. An electronic key (1) according to any one of the preceding claims, **characterized in that** the electronic key (1) and the module (5) form one single element.

10. An electronic key (1) according to any one of claims 4 to 5, **characterized in that** the means is an adapter (514) able to receive all or part of said module (5).

11. An electronic key (1) according to the preceding claim, **characterized in that** the adapter (514) comprises means for guiding (515) said module (5) and means for blocking (512) said module (5).

12. An electronic key (1) according to the preceding claim, **characterized in that** the adapter (514) comprises means for positioning (515 or 516) the module (5) at a height corresponding to a height determined by the thickness of the port (3).

13. An electronic key (1) according to any one of the preceding claims, **characterized in that** it comprises components wholly or partly complying with the ISO 7816 standard or the micro SIM card standard.

14. An electronic key (1) according to any one of the preceding claims, **characterized in that** the integrated circuit chip comprises a data securing application or an Internet access application or an e-commerce application or an on-line payment application.

15. An electronic key (1) according to the preceding claim, **characterized in that** said application is an application for a chip of a chip card.

16. An electronic key (1) according to any one of claims 1 to 6 or 9, **characterized in that** it comprises an adapter (514) receiving the module (5), with said adapter having external dimensions compatible with the internal dimensions of the port.

17. A method for producing an electronic key (1) for the communication of data between said electronic key and a communication device, with said electronic key being so arranged as to connect a port (3) of a communication device (100) and communicate said data via such port the electric connection pins (32) of which are mutually parallel,
- with said electronic key comprising a module with a body (5) having two opposed and flat main external surfaces, an integrated circuit chip, contact pads (28) connected to said chip and opening on the side of one of such surfaces,
**characterized in that** it comprises a step of manufacturing a micro-module comprising the chip and the contact pads, a step of fixing the micro-module in the body (5),
with the contact pads (28) consisting of a row of linear tracks spaced apart on their longitudinal sides, so as to match the arrangement of the connection pins (32) of the device and be adapted to be directly and physically connected to their respective connection pins, when inserting the electronic key into said port.

18. A method according to the preceding claim, **characterized in that** the port is of the USB type.

19. A method according to any one of claims 17 or 18, and wherein the port has a determined format, **characterized in that** the module further comprises a module body and **in that** said method comprises the step of cutting said module body to a format compatible with that of said port.

20. A method according to any one of claims 17 to 19, **characterized in that** the module has longitudinal edges and **in that** said method comprises the step of folding or bending said longitudinal edges so that said edges have a thickness equal to a thickness determined by the thickness of the port.

21. A method according to any one of claims 17 to 19, **characterized in that** the module has longitudinal edges and **in that** said method comprises the step of insetting or thermoforming or overmolding a groove on each one of said longitudinal edges so that said edges have a thickness equal to a thickness determined by the thickness of the port.

22. A method according to one of claims 17 to 19, **characterized in that** it comprises the step of depositing material over all or part of a face of said module opposed to the one provided with the contact pads so that the module has, as a whole or in part, a thickness equal to a thickness determined by the thickness of the port.

23. A method according to any one of claims 17 to 22, **characterized in that** it comprises the step of inserting said module into an adapter intended to be itself inserted into said port.
